Europäisches Patentamt

European Patent Office

Office européen des brevets

(19)

(11) EP 0 838 911 A2

(12) **EUROPEAN PATENT APPLICATION**

(43) Date of publication:
29.04.1998 Bulletin 1998/18

(51) Int. Cl.$^6$: **H04B 7/08**

(21) Application number: 97307145.9

(22) Date of filing: 15.09.1997

(84) Designated Contracting States:
AT BE CH DE DK ES FI FR GB GR IE IT LI LU MC NL PT SE

(30) Priority: 23.10.1996 US 735841

(71) Applicant:
NORTHERN TELECOM LIMITED
Montreal, Quebec H2Y 3Y4 (CA)

(72) Inventor: Hudson, John Edward
Stanstead, Essex, CM24 8LR (GB)

(74) Representative:
Ryan, John Peter William et al
Nortel Patents,
London Road
Harlow, Essex CM17 9NA (GB)

(54) **Adaptive antenna**

(57) Weighting vectors for an adaptive antenna, or diversity antenna, are determined by applying a plurality of test weighting vector sets, and measuring a quality of a signal received or transmitted for each set, wherein an optimum set of weighting vectors is determined from the test sets and from each measured signal quality. The optimum set can be determined without carrier phase information, and without iteratively refining the test sets.

Fig 3

Weighting coefficient determination

apply test weighting coefficient sets

measure signal quality for each test set

scale test sets according to respective measured signal qualities

determine an average vector direction representing a direction of a "centre of gravity" of the scaled vectors

use the average as the next optimum weighting vector

EP 0 838 911 A2

## Description

### Field of the Invention

The invention relates to methods of determining weighting vectors for a diversity antenna, to systems for applying weighting vectors to signals received from or transmitted by an antenna, to methods of operating communications systems and to base stations for cellular communications systems.

### Background to the Invention

The term diversity antenna encompasses adaptive antennas in which a number of distinct signals are received, separated effectively in time or space domains. From these separate signals, a received signal is derived. One stage of the processing involves applying weighting vectors to the signals. By varying these vectors, the reception characteristics can be varied. For example, the direction and shape of the main beam can be varied. The direction of null points can be varied. This enables desired signals to be tracked, and null points to be aimed at interference sources. An early example is shown Cable Television Engineering Vol 10 No 9 August 1976 "A steerable aerial for UHF reception in Alderney" by Dr M D Windram, p362-369.

Conventional diversity antennas, in the cellular industry, are usually designed, for simplicity and economy, to be optimum for one desired signal in a thermal noise background. However such antennas often operate in noise backgrounds which also contain directional interference from other users in nearby cells. In this circumstance they are slightly suboptimum. If the antenna is designed in a more complicated and expensive way to be optimum for the directional interference background it would become what is commonly known as an adaptive null steering antenna. For the present purposes, the term diversity is intended to encompass both types in which signal power or signal to noise plus interference ratio may be monitored and used in refining the weighting vectors.

While the case of receiving signals using the antenna will be described, everything described can equally be applied to the case of transmitting signals, provided the signal strength can be monitored at the mobile station and transmitted back to the base.

The vectors may be applied after the separate signals have been processed by a beam forming matrix. The separate signals may originate from separate elements of an antenna, the spacing depending on wavelength of the signal to be received and the application amongst other factors. For example, a half wavelength separation is preferred for beam forming, while several wavelength separation is preferred for multipath conditions where there are reflections from buildings and the like.

Modifying the characteristics of the antenna is particularly useful in cellular radio communication systems. The characteristics of the antenna can be semi-permanently adapted to the location. They can also be adapted in real time in response to the moving position of a mobile with which it is desired to communicate. Real time adaptation can also be used to react to movement of unwanted interference sources, e.g. mobiles communicating on other frequencies or with other neighbouring base stations on the same frequency.

In particular, adaptive antenna systems enable lower power operation, which can enhance battery life of mobiles. Furthermore, the enhanced directional properties of the multielement adaptive antenna reduce interference from spatially separated interference sources and allow better frequency reuse.

Older FM systems facilitated mobile supervision by transmitting continuously supervisory audio tones (SATs) from each base station. A limited number of different SATs were specified. A SAT reuse pattern was arranged to be larger than the frequency reuse pattern. Thus, neighbouring frequency reuse cells sharing the same RF carrier frequency could use different SAT frequencies. Thus, under conditions where there is sometimes interference between reuse cells and hence uncertainty as the location of a mobile, the demodulation of the SAT frequencies gave an unambiguous reference to the base station that the mobile should be receiving.

Some newer digital systems dispense with SATs, but send training signals which can also be used to facilitate determining weighting vectors for adaptive antenna systems. Such training signals are transmitted regularly, and enable a receiver to calculate a desired, or an optimum received signal strength or signal to noise ratio, or signal to interference ratio at a given moment.

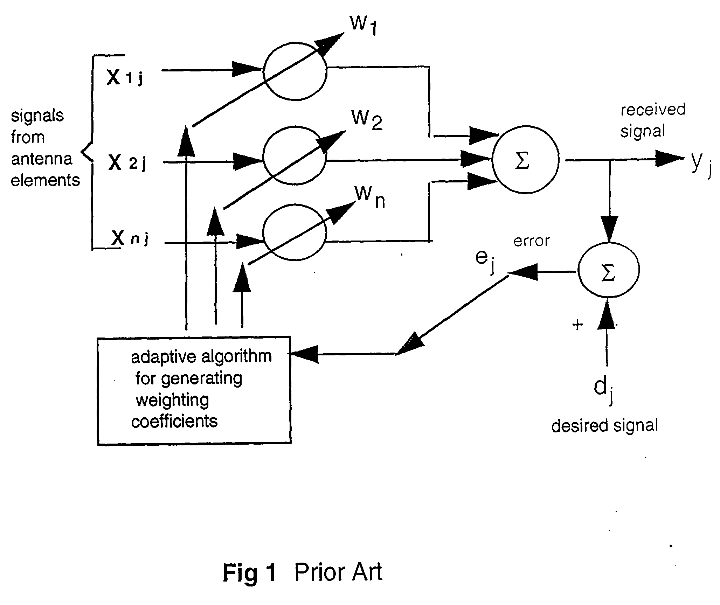

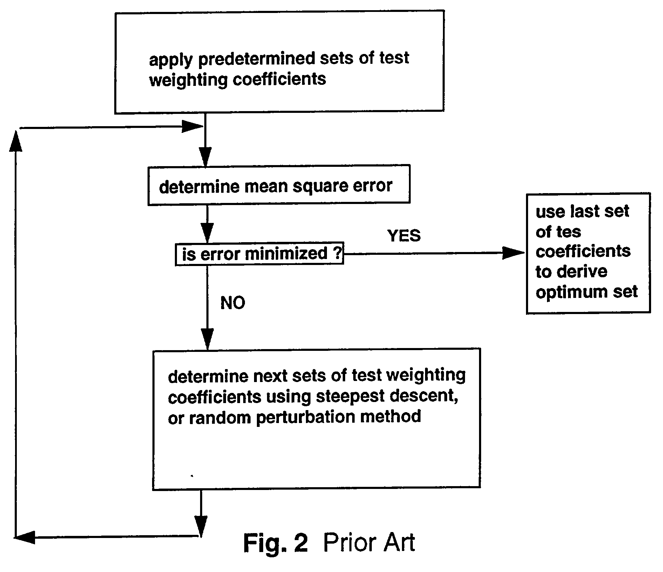

Thus if a set of test weighting vectors are applied, and a received signal derived, it can be compared with the desired signal. The difference constitutes an error signal. This can be fed back to determine a next set of test weighting vectors. An iterative process can then be used to reduce the error as much as possible. The final test set is regarded as the optimum set, and is used when receiving unknown, non-training signals. This is illustrated in Figures 1 and 2.

Such a system has been described in IEEE transactions on antennas and propagation, pages 615 to 637, "A comparison of Adaptive Algorithms based on the methods of steepest descent and random search", by Widrow and McCool (hereinafter 'Widrow'). Quality of solution and speed of adaptation are assessed for various methods of deriving the next set of test weighting vectors.

The starting points in Widrow are older algorithms of the correlator type (often known as LMS 'least mean square' algorithms) which coherently correlate, at intermediate frequency or baseband, the output error signal with the element input signals to find the vector gradient. However, these algorithms require a reference signal. A reference signal to enable feedback of complex error signals is not always transmitted and is never available for FM signals. A second disadvantage is the requirement for access to the r.f. signals before weighting, which adds to the complexity of the hardware.

Widrow discloses solving these problems by using perturbation algorithms. However, speed of adaptation is a considerable problem with the algorithms disclosed. A number of different sets of test weighting vectors are used to determine a first error signal. Owing to noise, interference fluctuation, and fast signal fading, the measured SNR is always fluctuating and it is difficult to find the best signal to noise ratio solution. Thus a large number of iterations, typically on the order of several thousand, must be done to converge to the best solution.

The use of SAT signals as a signal strength indicator for an adaptive time domain filter for FM is disclosed in:- R. He and J.H. Reed: "AMPS interference rejection by exploiting the SAT information", IEEE Personal, Indoor and Mobile Radio Communications conference, (PIMRC'95), pp. 596-602.

## Summary of the Invention

The invention seeks to improve on the known methods and systems.

According to the invention, there is provided a method of determining weighting vectors for a diversity antenna by applying a plurality of test weighting vector sets and measuring a quality of a signal received or transmitted for each set, wherein an optimum set of weighting vectors is determined from the test sets, and from corresponding measured signal qualities, by scaling the test sets according to the respective measured signal qualities, and averaging vector directions of the scaled test sets, in a manner insensitive to the arbitrary complex scalings inherent in the test weighting vectors.

This enables better or faster calculation of an optimum solution, with fewer signal quality measurements.

According to another aspect of the invention there is provided a method of determining weighting vectors for a diversity antenna by applying a plurality of test weighting vector sets, and measuring a quality of a signal received or transmitted for each set, wherein an optimum set of weighting vectors is determined by forming a weighted sum of the plurality of test sets, according to the measured signal qualities, wherein the test sets are all predetermined.

By deriving the optimum set of weighting vectors using the original predetermined test sets, there is no need for multiple stage iterative development of the weighting vector. By avoiding determining the optimum set from derived test sets, rather than predetermined ones, the search can be accelerated, by using fewer signal measurements, and it becomes possible to use parallel processing techniques for further reduction in processing time.

According to a further aspect of the invention, there is provided a base station for a cellular communication system comprising:

a diversity antenna having a plurality of elements;
means for applying test weighting vector sets to weighting signals being transmitted or received by the elements of the antenna;
means for receiving signal quality measurements of signals transmitted or received by the antenna; and

means for determining an optimum set of weighting vectors from the test sets and respective signal quality measurements by scaling the test sets according to the respective measured signal qualities and averaging vector directions of the scaled test sets, in a manner insensitive to the arbitrary complex scalings inherent in the test weighting vectors.

Preferred features are set out in dependent claims. Preferred features may be combined as appropriate, as would be appreciated by a person skilled in the art.

**Brief Description of the Drawings** For the better understanding of the invention, and to show how the same may be carried into effect, it will now be described by way of example, with reference to the drawings, in which:

Fig. 1 shows a prior art system in schematic form;
Fig. 2 shows a prior art method;
Fig. 3 shows vector calculating steps according to an embodiment of the invention;
Figs. 4(i) to 4(iii) show weighting vector applying arrangements;
Figs. 5 and 6 show an FM receiver in schematic form;
Fig. 7 shows an embodiment of the invention using a digital receiving arrangement;
Fig. 8 shows another embodiment of the invention, with multiple parallel vector applying means;
Fig. 9 shows an embodiment applied to a downlink transmitter;
Figs 10 to 16 show graphs of test results of embodiments of the invention.

## Detailed Description

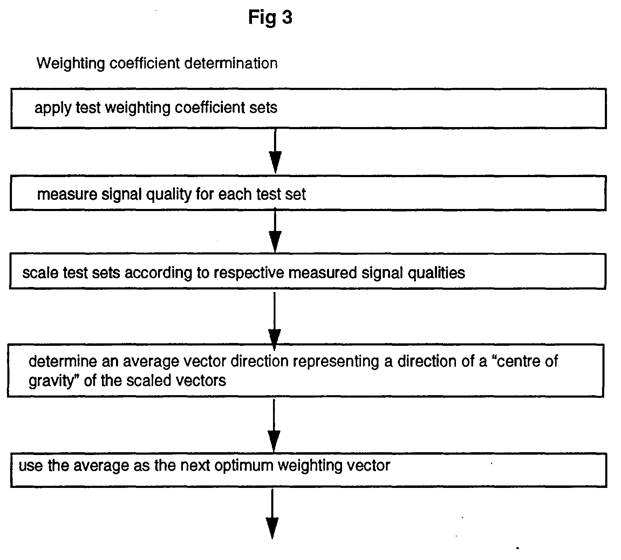

Figure 3 shows the principle steps in determining weighting vectors according to an embodiment of the first aspect of the invention. The algorithm involves testing the CNIR to (carrier noise plus interference ratio) with a series of test weighting vector sets, and forming a weighted sum of these by finding the eigenvalues of an outer product matrix.

After applying one or more sets of test weighting vectors, and measuring a resulting signal quality for each test set, a covariance matrix is formed. This matrix is scaled according to the respective measured signal qualities. The largest eigenvector of the scaled matrix is identified and used as the weighting vector set. This is an example of a method of averaging vector directions which is insensitive to arbitrary complex scalings inherent in the test vectors. Beam steering generally requires phase shifts in the weightings which implies complex valued weights. Effectively the averaging of the vector directions involves finding the direction of the 'centre of gravity' of the scaled vectors.

This represents a radically different method over the prior art relating to perturbation methods which involve measuring the incremental change in performance as a result of predetermined or random changes in weighting vectors, as discussed above. These algorithms are sensitive to fading signal levels. In contrast, the present invention searches over randomly selected weighting vector values and makes a weighted summation of the best weighting vector sets.

Thus the method of the invention is less sensitive to signal fading if measurements are taken and averaged over several cycles of fading.

The median CNIR obtained using a random set of weights is close to the CNIR measured at a single element.

Various methods of guided search may be used to identify a good set of weighting vectors and one possibility will now be described in more detail.

## Theory

Suppose we have an N element antenna, M<N interference sources with direction vectors

$$\mathbf{S}_i, \quad i = 1,..,M \qquad (1)$$

and one desired signal with direction vector $\mathbf{S}_0$. A random unit norm vector $\mathbf{V}$ has a mean square projection of unity on each vector:

$$< \left| \mathbf{V}^H \mathbf{S}_i \right|^2 > = < \mathbf{S}_i^H Cov(\mathbf{V}) \mathbf{S}_i >$$
$$= \mathbf{S}_i^H \mathbf{I} \mathbf{S}_i \equiv 1 \qquad (2)$$

so the average CIR (carrier to noise ratio) is the same as would be found on a single element:

$$CIR_{OUT} = \frac{< \left| \mathbf{V}^H \mathbf{S}_0 \right|^2 P_0 >}{\sum\limits_{i=1}^{M} < \left| \mathbf{V}^H \mathbf{S}_i \right|^2 > P_i}$$
$$= \frac{P_0}{\sum\limits_{i=1}^{M} P_i} = CIR_{INPUT} \qquad (3)$$

where the $P_i$ are the randomly fading interference powers, and $P_0$ is the desired signal power.

*Adaptive solution* the CNIR of an antenna array with a weighting vector $\mathbf{W}$ is given by

$$CNIR = \frac{\mathbf{W}^H \mathbf{R}_{ss} \mathbf{W}}{\mathbf{W}^H \mathbf{R}_{nn} \mathbf{W}} \qquad (4)$$

where $\mathbf{R}_{ss}$ is the signal covariance matrix and $\mathbf{R}_{nn}$ is the noise covariance matrix. If we are dealing with narrow band data, typical of AMPS, then multipath dispersion is not significant and the signal covariance matrix $\mathbf{R}_{ss}$ is a dyadic matrix of rank one:

$$\mathbf{R}_{ss} = P_0 \mathbf{S}_0 \mathbf{S}_0^H \tag{5}$$

where $P_0$ is the desired signal power and $\mathbf{S}_0$ is the unit length direction vector for the desired signal. The noise plus interference covariance matrix is given by

$$\mathbf{R}_{nn} = \sigma_t^2 \mathbf{I} + \sum_{i=1}^{NI} P_i \mathbf{S}_i \mathbf{S}_i^H \tag{6}$$

where $\sigma_t^2$ is the thermal noise covariance. The ratio of powers in eqn (4) can be transformed as follows. Let

$$\mathbf{w} = \mathbf{R}_{\underline{n}}^{-\frac{1}{2}} \mathbf{W} \tag{7}$$

then eqn (4) can be rewritten

$$CNIR = \frac{w^H R_{nn}^{-\frac{1}{2}} R_{ss} R_{nn}^{-\frac{1}{2}} w}{w^H R_{nn}^{-\frac{1}{2}} R_{nn} R_{nn}^{-\frac{1}{2}} w} \\ = \frac{w^H \tilde{R}_{ss} w}{w^H w} \tag{8}$$

The transformed matrix $R_{nn}^{-\frac{1}{2}} R_{ss} R_{nn}^{-\frac{1}{2}}$ remains of rank one and eqn (8) can be written in the form

$$CNIR = \frac{\mathbf{w}^H \tilde{\mathbf{S}} \tilde{\mathbf{S}}^H \mathbf{w}}{\mathbf{w}^H \mathbf{w}} = \frac{\left| \mathbf{w}^H \tilde{\mathbf{S}} \right|^2}{\mathbf{w}^H \mathbf{w}} \tag{9}$$

(Where $\tilde{\mathbf{S}} = R_{nn}^{-\frac{1}{2}} S$)

It can now be seen that the CNIR is proportional to the cosine of the angle $\theta$ between $\mathbf{w}$ and $\tilde{S}$ :

$$CNIR = CNIR_{MAX} \cdot \cos(\theta) \tag{10}$$

If a random weight vector V is put on the elements, it can be regarded as sampling $\cos(\theta)$. The following algorithm is proposed for estimating the optimum weighting vector $\mathbf{W}_{opt}$. Generate a sequence of random vectors $\mathbf{W}_i$, $i = 0,..,K$. Measure the CNIR for each

$$CNIR_i = \frac{\mathbf{W}_i^H \mathbf{R}_{ss} \mathbf{W}_i}{\mathbf{W}_i^H \mathbf{R}_{nn} \mathbf{W}_i} \tag{11}$$

Form the weighted matrix outer product

$$R = \frac{\sum_{i=0}^{K} CNIR_i \cdot W_i W_i^H}{\sum_{i=0}^{K} CNIR_i} \qquad (12)$$

and select the largest eigenvector of **R** to use as the weighting vector. The eigenvalue step is forced since the vectors $W_i$ have random phase angles and cannot be added directly.

It is not suggested that this is an optimum algorithm, since that would require sampling randomly in the space of $w = R^{-\frac{1}{2}} W$ rather than **W** itself. However, for interference situations which are not too ill conditioned, with all direction vectors near orthogonal, this should not make too much difference.

## Implementation

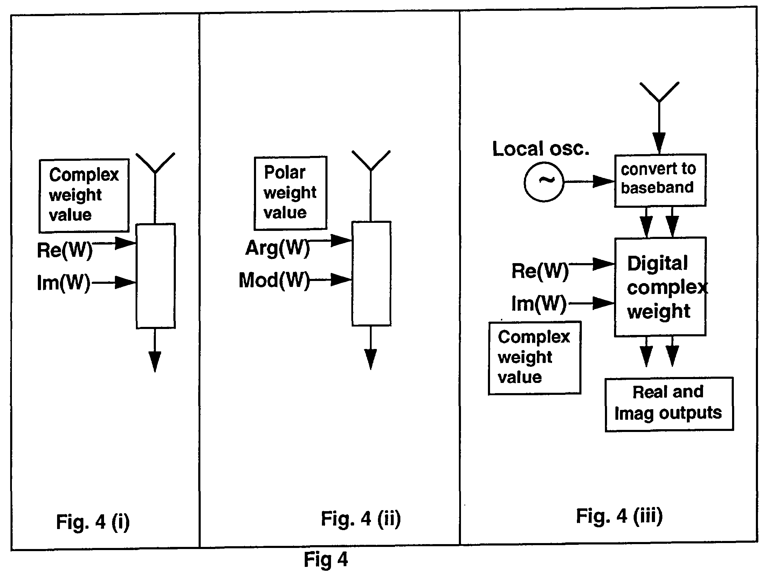

There are various ways of performing the weighting of signals coming from the individual elements of the antenna when receiving. Correspondingly, when transmitting, there are various ways of performing the weighting on the signals going to the individual elements. Figure 4 (i) shows in schematic form how the weighting can be applied in a complex form, having a real value Re (W) and an imaginary part, Im (W). As discussed above, there may be other circuits between the antenna elements and the weighting circuitry, such as beam forming matrix circuitry.

Figure 4 (ii) shows a similar feature in schematic form, where the weighting is applied in a polar form, having an argument, Arg (W), and a modulus, Mod (W). This is essentially another way of representing complex values.

In any case, r.f. weighting circuits (perhaps digitally driven), are readily available and need not be described in more detail. The particular choice will depend on cost, size and other characteristics of the application.

Weighting in the r.f. stage may be less appropriate for a digital receiver. In this case, the weighting can be carried out later, using conventional digital hardware and software, after conversion to base band, using a local oscillator, as shown in figure 4 (iii). Separate real and imaginary outputs are created, which can be multiplied in a straight forward manner by the real and imaginary weighting values.

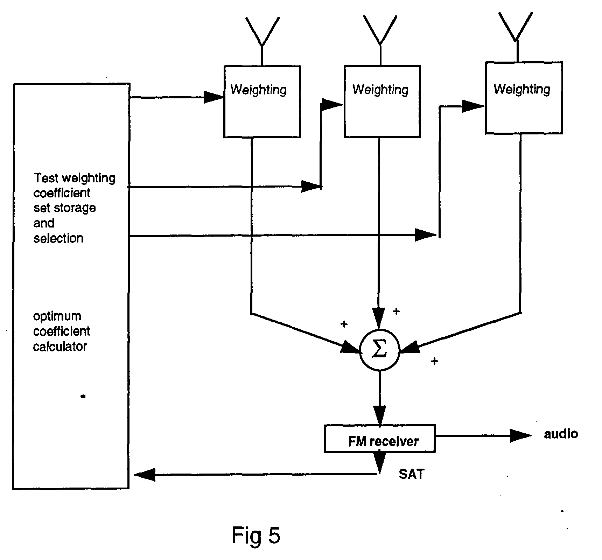

Figure 5 shows in schematic form an analog receiver with three elements to its antenna. Weighting vectors can be applied to each of the signals produced by the elements of the antenna. A set of weighting vectors comprises three vectors. Each vector will be a complex value, expressed either in real and imaginary parts, or in polar form. After weighting, the signals are summed and fed to a receiver, in this case an FM receiver. The useful signal output of the receiver may include an audio portion and a SAT portion. A signal quality, such as signal strength, or signal to noise ratio may be derived from the output of the receiver. As illustrated, it is convenient to use the SAT to derive the quality of the resulting signal for each set of weighting vectors.

To calculate the most appropriate set of weighting vectors, conventional microprocessor circuitry or a digital signal processor circuitry can be used to carry out the steps summarised in figure 3.

Preferably the series of test weighting vector sets are chosen at random. They may be calculated each time or retrieved from storage. If they are recalculated in a pseudo random fashion, difficulties with periodic signal fading coinciding with the predetermined vectors can be avoided. For each set a signal strength or a signal to noise ratio is fed back to the microprocessor, if necessary via an analog to digital converter. It may be preferable to select the best results, and scale the corresponding test weighting vector sets according to these results. Then a covariance matrix can be formed from the selected scaled test weighting vector sets, and the largest eigenvector calculated. This vector can form the next weighting vector set for use with actual signals as opposed to test signals. The weighting vectors can be updated regularly, for example every second, using further random test weighting vector sets. For higher frequencies, eg UHF, updating may be carried out much more rapidly, eg in microseconds, according to the limitations of the available processing power and signal bandwidth. For signal bandwidths in Megahertz the weights could be changed in microseconds and changes in signal quality have time to propagate through the receiver.

Since matrix processing operations can be relatively computationally intensive operations, it may be appropriate to use multiple processors, to speed up the calculation.

Furthermore, if it is required to accelerate the calculation of the optimum weighting vector set still further, it would be possible to provide a number of weighting means for each antenna element. Correspondingly, a plurality of summing devices and receiving circuits would be required, operating in parallel.

This would enable two or more test weighting vector sets to be applied simultaneously, resulting in two or more corresponding signal quality values being recorded simultaneously. With such an arrangement, for a given number of test weighting vector sets to be applied, the amount of time to obtain the necessary corresponding signal qualities can be reduced. Alternatively, for a given allowable time, more test sets can be applied, and the accuracy of the arrangement can be improved.

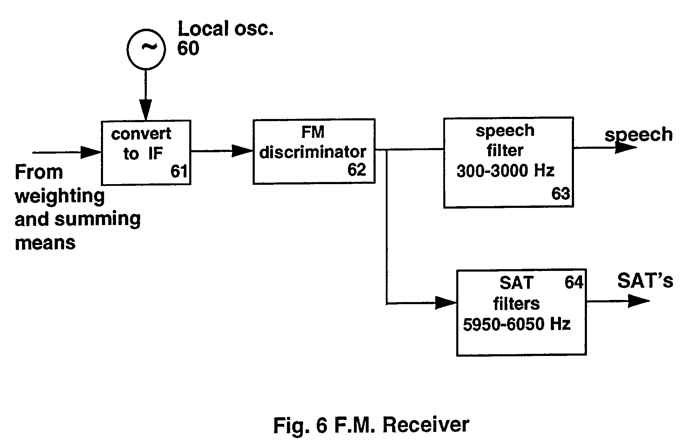

Figure 6 shows in schematic form some parts of the receiver following the weighting circuitry. A local oscillator 60 feeds conversion circuitry for converting the signal to IF. The converted signal is fed to an FM discriminator 62. The output of the FM discriminator is fed to a speech filter 63 for extracting speech signals. An SAT filter extracts the SAT's. The signal quality can be determined from the SATs for example by analog to digital conversion, storage of samples and performing conventional signal processing to determine an amount of noise and thus a signal to noise ratio, or to determine signal strength.

The received signal should be sampled for long enough to allow for propagation of any weighting changes. Account should be taken of filtering in the receiver. SAT filters may be followed by signal processing to obtain a d.c. digital value for signal amplitude, power or dBs. Standards for SAT transmission have been developed.

Other parameters of the received signal could be measured to determine quality, such as envelope amplitude of the signal, statistical parameters of the noise over a period of time, or the strength of a particular interfering source, for example.

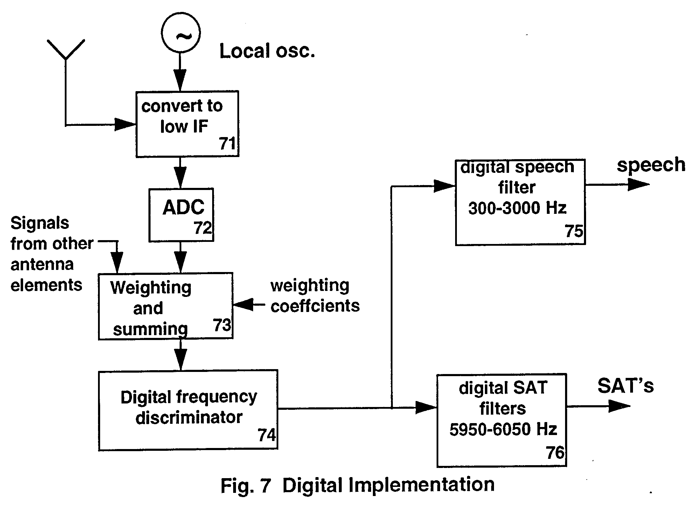

Figures 5 and 6 show details of a typical FM receiver using conventional analog signal processing. Figure 7 shows a corresponding digital implementation. In this case, the weighting can be carried out after the frequency has been changed. A converter 71 converts either to a low intermediate frequency, or to a DC baseband. An analog to digital converter 72 converts the output into digital form. Weighting and summing carried out by item 73 is more conveniently performed in digital circuitry. A digital frequency estimator 74 then extracts the useful parts of the signal. A digital speech filter 75 can extract the speech, and digital SAT filters can be used to extract the SATs. These functions can be carried out using conventional microprocessor or digital signal processor hardware, or more dedicated custom designed hardware if appropriate. The output of the SAT filters can be fed back to the vector determining circuitry as discussed above.

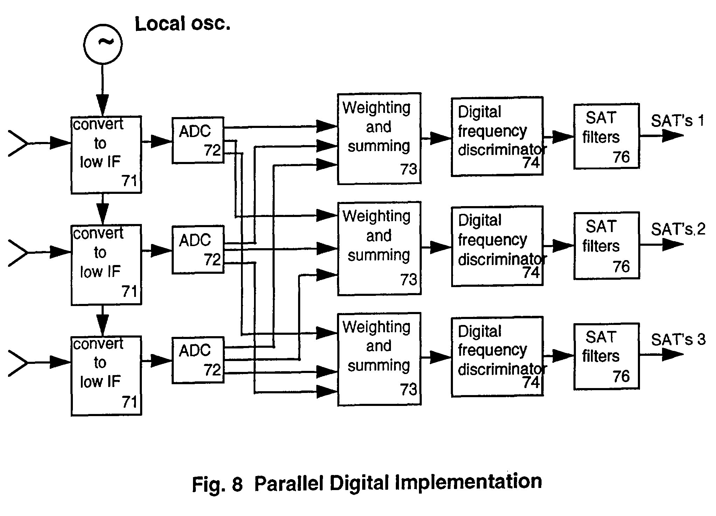

Figure 8 shows a parallel digital implementation in which multiple weighting and summing elements are provided. This enables three or more different test weighting vector sets to be used simultaneously. Three or more digital frequency estimators 74 and SAT filters 76 can be provided, giving the advantages discussed above.

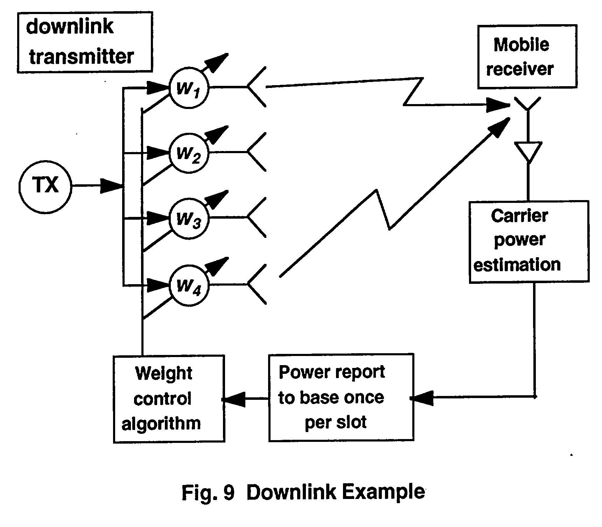

Figure 9 shows in schematic form some of the principal elements in a system in which the weighting vectors for transmitting from the antenna are determined. The base station is shown as the downlink transmitter, comprising transmitter circuitry TX feeding four elements of the antenna through individual weighting means $W_1$ to $W_4$. A weighting control algorithm determines the weighting vector set as described above for the case of weighting the received signal.

To be able to feed back signal strength for each of the test weighting vector sets, it is necessary to measure the transmitted signal power at a typical receiving station. Such an outstation for receiving the signal is represented in figure 9 by a mobile receiver, though conceivably, fixed outstations could be used for this purpose. Transmitted signal quality can be assessed at the receiver. In the example illustrated, carrier power is estimated. The measurements need to be returned in some way to the base station to enable appropriate selection of the optimum test weighting vector set. In theory, the scaling of the test vector sets, and the creation of a weighted average, for example, by creating a covariance matrix and obtaining the largest eigenvector of the matrix, could be carried out anywhere. Conveniently it is carried out at the base station, and this requires that the signal quality is fed to the base station. This can be carried out in the context of a cellular communication system by sending a short burst of data eg once per slot. Typical slot repetition rates are 70 Hz for IS136 applied to PCS in the USA, and 200 Hz for GSM in Europe. Thus 70 or 200 signal quality samples, eg power samples, can be returned respectively, each second. Some synchronisation of the application of the test weighting vector sets with the slot timings could be used, and an optimum set calculated in the order of once per second. 70 to 200 test weighting vector sets would be expected to be sufficient to achieve good results, as will be discussed.

## Simulations

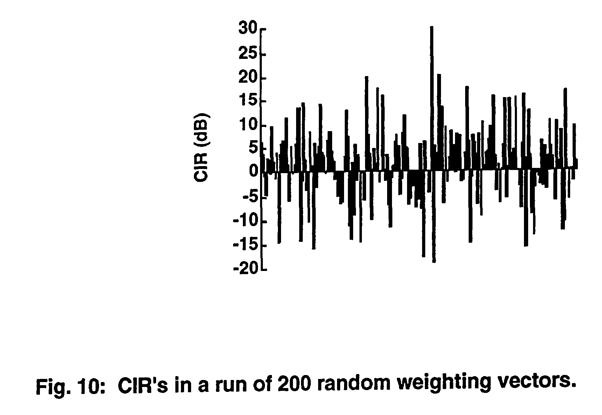

Test #1: A 4 element array is used with one interference and one desired signal and the interference and desired signal have equal mean powers. The signals' direction vectors are chosen randomly, i.e. they are vectors comprising independent complex Gaussian samples. The average CIR (carrier to interference ratio) at the antenna output should be unity under these conditions. Fig. 10 shows the CIR's obtained in a 200 sample run which bears out this expectation. The peak CIR observed is +31.8 dB at sample 110.

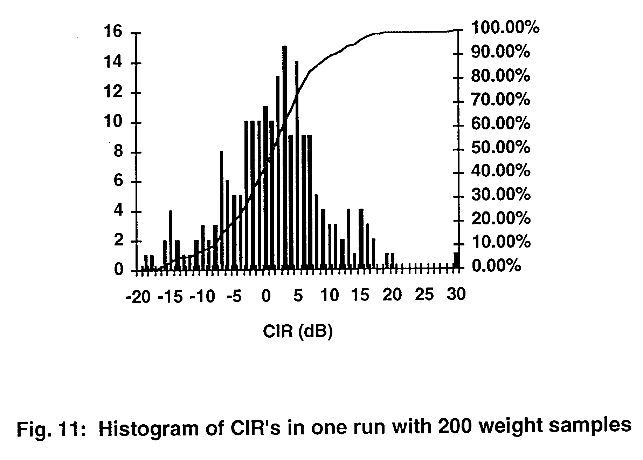

Fig. 11 shows a histogram of output CIR's

The samples, measured in decibels, have a mean of 1.86 dB, a median of 2.4 dB and a standard deviation of 7.8 dB and the distribution is not dissimilar to a log-normal. Using eqn.(12) and the eigenvector algorithm, the final weight vector produces a CIR of 29.3 dB. This is slightly less than the best of the samples.

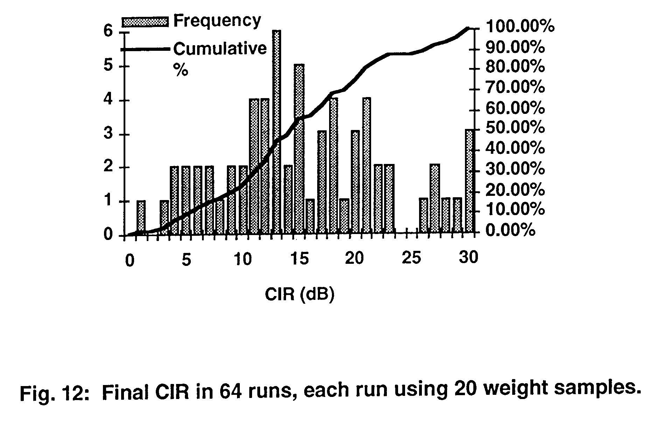

For test #2 only 20 sample weights are tested in each run with the signal direction held constant during a run. The whole experiment is repeated 64 times, getting 64 versions of eqn (12). Fig. 12 shows the 64 final CIR's.

The simulation shows the system is reasonably reliable. If the minimum static CIR for reception is say 7 dB then this figure is exceeded 85% of the time. Considering the mean element level CIR is 0 dB as in fig. 11 and the 64 runs will contain many ill-conditioned direction vectors, this level of performance is considered good and the rate of performance improvement is very fast.

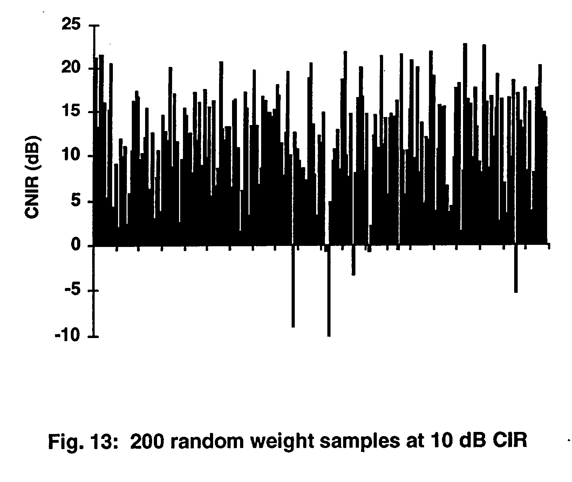

Test #3 is for a more benign situation, here 0 dB thermal noise is included, the desired signal level is 20 dB and the interference level is 10 dB, as might be observed in a typical cellular environment. Fig. 13 shows the CNIR obtained from 200 random weight samples. Several instances of negative CNIR's occur but the average is near 10 dB.

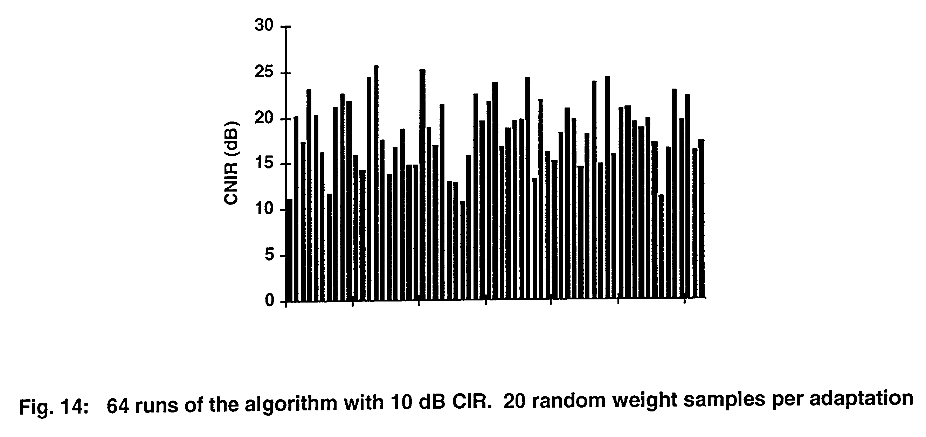

Fig. 14 below shows the final CNIR from the algorithm using 20 samples per adaptation and 64 adaptations.

The minimum CNIR observed using this algorithm is 10.6 dB which is the nominal average CNIR which indicates a reliable cancellation of the interference removing the few bad points in the non-directional antenna.

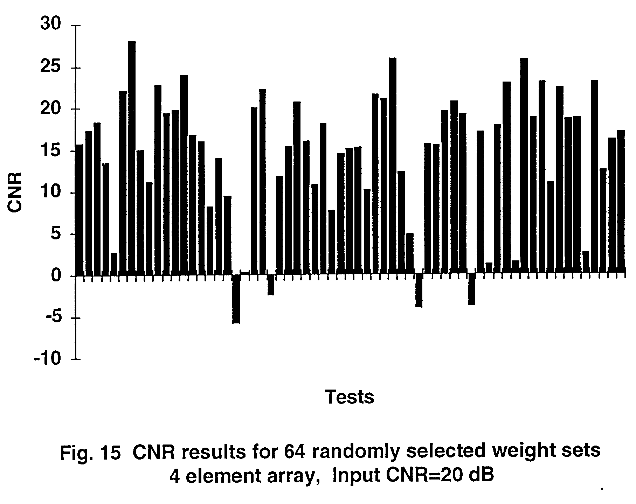

Fig. 15 shows the measured CNR (carrier to noise ratio) for a sequence of 64 random weight samples applied to a non-fading signal in a thermal noise background.

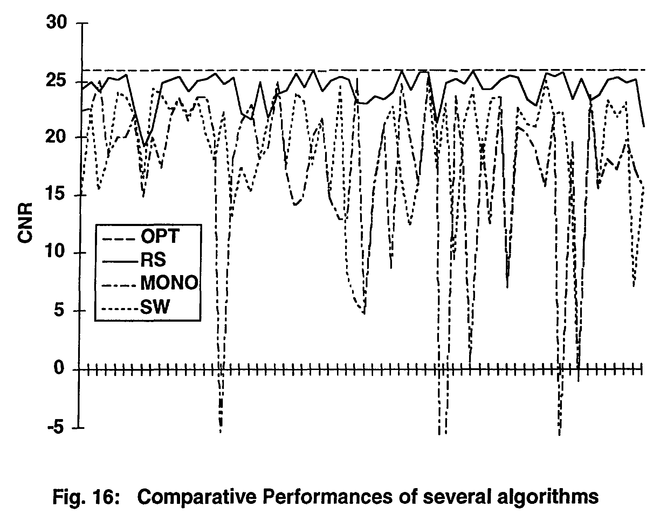

Fig. 16 shows the comparative performance for 4 optimal systems. The simulation conditions are as follows: 4 element antenna. The desired signal has an angular spread which leads to a correlated space vector at the antenna. The signal amplitude is fast Rayleigh fading from sample to sample with a means CNR of 20 dB except for when finally testing the optimised output CNR when it is returned to a constant 20 dB CNR. 24 samples are used for each search. The graph shows a total of 64 searches, each with a different line and different signal direction.

(1) top line is the true optimal diversity antenna. This gives a constant 6 dB gain and the output CNR is 26dB.
(2) next line down is the random search algorithm result. Here there is a loss relative to the optimum of about 2dB.
(3) 'MONO' is the result of sampling a single element at random, ie. the zero diversity result.
(4) 'SW' is the result of picking the best signal power of the 4 elements, ie. a standard switched diversity antenna

## Conclusions

A random search algorithm has been proposed for adapting a diversity/null steering antenna in a multipath plus interference environment. The algorithm involves testing the CNIR with random weight sets and forming a weighted sum of these. Finding the eigenvalues of an outer product matrix, is a preferred way of obtaining a weighted average of the test weighting vector sets.

Testing with 20 random weighting vector sets in a 4 element antenna gives sufficient information to give a performance never worse than the average CNIR. In other words the worst case results are eliminated. This method can enable an optimum set to be determined without iteratively refining the test sets. It can be combined with prior art iterative methods, eg by starting with the method of the invention then refining the result with a succeeding iterative stage, if greater accuracy is warranted. It is of particular use in antennas for communications systems including cellular systems, and can be used in a base station for determining weighting for both receiving and transmitting, or just one of the two. The fast rate of convergence is an advantage for the latter application.

Other variants will be apparent to a person skilled in the art within the scope of the claims.

## Claims

1. A method of determining weighting vectors for a diversity antenna by applying a plurality of test weighting vector sets and measuring a quality of a signal received or transmitted for each set, wherein an optimum set of weighting vectors is determined from the test sets, and from corresponding measured signal qualities, by scaling the test sets according to the respective measured signal qualities, and averaging vector directions of the scaled test sets, in a manner insensitive to the arbitrary complex scalings inherent in the test weighting vectors.

2. The method of claim 1 wherein the averaging step comprises the step of forming a covariance matrix of the test sets, scaled by respective measured signal qualities, and finding the largest eigenvector of the matrix for use as the optimum set.

3. The method of claim 1 wherein a pseudo random selection of test sets are used.

4. The method of claim 1 wherein a selection is made of the most favourable measured signal qualities, and the optimum set is derived from the selected signal qualities and the corresponding test sets.

5. The method of claim 1, wherein a signal received by the antenna is split into a plurality of received signals, a plurality of test sets are applied concurrently to respective ones of the received signals and a signal quality is measured concurrently for each set.

6. The method of claim 1 wherein the measured signal quality comprises a signal to noise ratio.

7. The method of claim 1 wherein the measured signal quality comprises a signal to interference ratio.

8. The method of claim 1 wherein the measured signal is derived from an FM discriminator for which there is no coherent reference available to generate a complex error signal.

9. The method of claim 1 wherein the measured signal is a supervisory audio tone.

10. A method of determining weighting vectors for a diversity antenna by applying a plurality of test weighting vector sets, and measuring a quality of a signal received or transmitted for each set, wherein an optimum set of weighting vectors is determined by forming a weighted sum of the plurality of test sets, according to the measured signal qualities, wherein the test sets are all predetermined.

11. The method of claim 10 wherein the weighted sum is obtained by averaging vector directions of the test sets in a manner insensitive to the arbitrary complex scalings inherent in the test weighting vectors.

12. The method of claim 10, wherein the optimum set is obtained by forming a covariance matrix of the test sets scaled by the respective measured signal quality, and finding the largest eigenvector of the matrix for use as the optimum set.

13. A method of operating a communication system comprising a base station and an outstation, the base station comprising a diversity antenna, wherein weighting vectors for transmitting signals from the antenna are determined using the method of claim 1 and wherein said step of measuring a quality of a signal transmitted, comprises the step of monitoring signal strength at an outstation.

14. A system comprising a base station and an outstation, the base station comprising a diversity antenna wherein the system is arranged to carry out the method of claim 1.

15. A base station for a cellular communication system comprising:

a diversity antenna having a plurality of elements;
means for applying test weighting vector sets to weighting signals being transmitted or received by the elements of the antenna;
means for receiving signal quality measurements of signals transmitted or received by the antenna; and
means for determining an optimum set of weighting vectors from the test sets and respective signal quality measurements by scaling the test sets according to the respective measured signal qualities and averaging vector directions of the scaled test sets, in a manner insensitive to the arbitrary complex scalings inherent in the test weighting vectors.

Fig 1  Prior Art

apply predetermined sets of test weighting coefficients

determine mean square error

is error minimized ?

YES

use last set of tes coefficients to derive optimum set

NO

determine next sets of test weighting coefficients using steepest descent, or random perturbation method

Fig. 2 Prior Art

## Fig 3

Weighting coefficient determination

| apply test weighting coefficient sets |
|---|

↓

| measure signal quality for each test set |
|---|

↓

| scale test sets according to respective measured signal qualities |
|---|

↓

| determine an average vector direction representing a direction of a "centre of gravity" of the scaled vectors |
|---|

↓

| use the average as the next optimum weighting vector |
|---|

↓

EP 0 838 911 A2

**Fig. 4 (i)**

Complex weight value

Re(W)

Im(W)

**Fig. 4 (ii)**

Polar weight value

Arg(W)

Mod(W)

**Fig. 4 (iii)**

Local osc.

convert to baseband

Digital complex weight

Re(W)

Im(W)

Complex weight value

Real and Imag outputs

Fig 4

EP 0 838 911 A2

Fig 5

Fig. 6 F.M. Receiver

EP 0 838 911 A2

Fig. 7 Digital Implementation

EP 0 838 911 A2

**Fig. 8  Parallel Digital Implementation**

downlink
transmitter

Mobile
receiver

$W_1$

$W_2$

TX

$W_3$

Carrier
power
estimation

$W_4$

Weight
control
algorithm

Power report
to base once
per slot

**Fig. 9  Downlink Example**

Fig. 10: CIR's in a run of 200 random weighting vectors.

Fig. 11: Histogram of CIR's in one run with 200 weight samples

Fig. 12: Final CIR in 64 runs, each run using 20 weight samples.

Fig. 13: 200 random weight samples at 10 dB CIR

EP 0 838 911 A2

Fig. 14: 64 runs of the algorithm with 10 dB CIR. 20 random weight samples per adaptation

EP 0 838 911 A2

Fig. 15  CNR results for 64 randomly selected weight sets
4 element array,  Input CNR=20 dB

Fig. 16: Comparative Performances of several algorithms